# FASCICULE DE BREVET EUROPEEN

(11) **EP 4 139 143 B1**
(45) Date de publication et mention de la délivrance du brevet: **05.03.2025**
(21) Numéro de dépôt: 21714165.4
(22) Date de dépôt: 25.03.2021
(51) Int. Cl.: B60K 1/04, B62D 21/15, B62D 25/08

(54) **VEHICULE ELECTRIQUE OU HYBRIDE MUNI D' UN RENFORT DROIT ET D'UN RENFORT GAUCHE**
ELEKTRISCHES ODER HYBRIDFAHRZEUG MIT EINER RECHTEN VERSTÄRKUNG UND EINER LINKEN VERSTÄRKUNG
ELECTRIC OR HYBRID VEHICLE PROVIDED WITH A RIGHT REINFORCEMENT AND A LEFT REINFORCEMENT

(30) Priorité: 22.04.2020 FR 2004019
(43) Date de publication de la demande: 01.03.2023
(73) Titulaire: RENAULT s.a.s., 92100 Boulogne-Billancourt (FR); NISSAN MOTOR CO., LTD., Kanagawa 221-0023 (JP)
(72) Inventeur: FARGEAS, Nicolas, 28410 SERVILLE (FR)
(74) Mandataire: Renault Group
(86) Numéro de dépôt international: PCT/EP2021/057731
(87) Numéro de publication internationale: WO 2021/213775

(56) Documents cités:
- WO-A1-2019/001530
- FR-A1- 3 055 300
- US-A1- 2020 070 641

## Description

### Domaine technique

L'invention a pour domaine technique la structure d'un véhicule automobile, et plus particulièrement les renforts pour une telle structure.

### Etat de la technique antérieure

Les véhicules automobiles comprennent généralement un châssis configuré pour supporter l'ensemble des composants mécaniques et la carrosserie du véhicule. Le châssis comprend deux longerons longitudinaux et une pluralité de traverses disposées transversalement entre lesdits longerons.

Un plancher de véhicule automobile est supporté par le châssis et délimite l'intérieur de l'habitacle du véhicule.

Généralement, le plancher d'un véhicule automobile comprend une partie arrière appelée « plancher arrière » reliée à une partie avant appelée « plancher avant ».

Le plancher arrière délimite la cabine des passagers arrière et comprend une partie avant délimitant une zone de plancher destinée à recevoir les pieds des passagers, aussi appelée « cave à pied » et une partie arrière surélevée par rapport à la partie avant et délimitant une zone de plancher destinée à recevoir les sièges de la deuxième rangée de sièges. Les parties avant et arrière du plancher arrière sont reliées par un épaulement ou portion de jonction appelée « pare-close ».

Le développement de véhicules automobiles hybrides rechargeables PHEV (acronyme anglophone pour « Plugin Hybrid Electric Vehicle") soulève des problèmes d'intégration et de protection de la batterie de traction. Il est généralement admis de fixer des éléments fonctionnels, tel que la batterie de traction, aux longerons longitudinaux. Néanmoins, de telles fixations impliquent d'y ménager des lumières, sources de fragilité, notamment dans les chocs de type poteau.

De plus, dans les véhicules PHEV compacts, la pareclose est particulièrement fine et compacte ce qui limite son utilisation pour la fixation de la batterie de traction.

Par ailleurs, l'habitacle du véhicule doit comprendre un espace suffisant pour le passage des pieds des passagers du deuxième rang, c'est-à-dire installés sur les sièges disposés immédiatement derrière le conducteur et le passager avant.

Le procédé d'assemblage du véhicule limite le volume de la pareclose vers l'intérieur de l'habitacle pour permettre le chargement de l'unité centrale entre l'unité avant et l'unité arrière.

Des documents de l'état de la technique, on connait les documents suivants.

Le document EP2447099 divulgue une batterie disposée sur le plancher du véhicule.

Le document WO 2007-100118 divulgue une batterie fixée dans les corps creux des longerons. Néanmoins, une telle fixation dégrade la résistance mécanique des longerons et mène à une mauvaise résistance du véhicule aux chocs latéraux et sur poteau.

Le document US 2020/070641 A1 divulgue un véhicule électrique ou hybride muni d'une batterie de traction disposée sous un plancher arrière entre des longerons arrières et une pareclose entre une partie arrière du plancher arrière et une partie avant du plancher arrière, le véhicule étant muni d'un renfort droit et d'un renfort gauche permettant de rigidifier la pareclose et les longerons longitudinaux afin de protéger la batterie de traction des déformations résultantes d'une collision latérale de type poteau.

### Exposé de l'invention

L'invention est définie par l'objet de la revendication indépendante 1. Les revendications dépendantes comprennent d'autres caractéristiques facultatives de l'invention.

### Brève description des dessins

D'autres buts, caractéristiques et avantages de l'invention apparaîtront à la lecture de la description suivante, donnée uniquement à titre d'exemple non limitatif et faite en référence aux dessins annexés sur lesquels :
- [Fig 1] illustre les éléments du véhicule disposés sous la partie arrière gauche du plancher arrière à proximité de la pareclose,
- [Fig 2] illustre le renfort selon l'invention et sa disposition avec les éléments du véhicule disposés sous la partie arrière du plancher arrière à proximité de la pareclose,
- [Fig 3] illustre les éléments du véhicule disposés sous les parties arrières gauche et droite du plancher arrière à proximité de la pareclose,
- [Fig 4] illustre plus en détail le renfort arrière gauche, et
- [Fig 5] illustre le renfort selon l'invention et sa disposition avec les éléments du véhicule disposés sous la partie arrière du plancher arrière à proximité de la pareclose, ainsi que la batterie de traction.

### Description détaillée

Comme indiqué précédemment, le percement de lumières dans les longerons longitudinaux pour fixer la batterie de traction mène à une dégradation des performances du châssis lors de chocs arrière ou de type poteau. Les inventeurs ont alors eu l'idée de créer une pièce dédiée épousant la forme de la pareclose et du longeron longitudinal adjacent dans laquelle est ménagée une lumière destinée à la fixation de la batterie.

Par ailleurs, une telle pièce dédiée contribue à la rigidification du châssis et à améliorer la résistance mécanique de celui-ci lors de chocs.

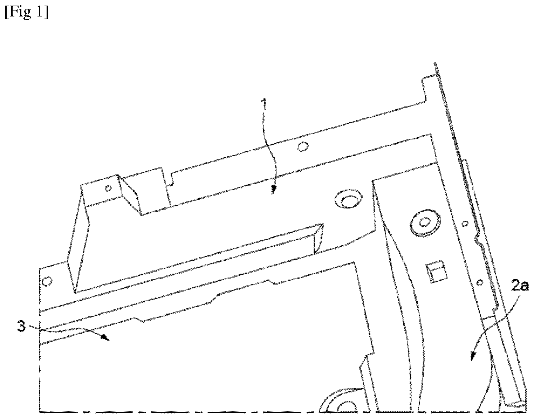

La figure 1 illustre les éléments du véhicule disposés sous la partie arrière du plancher arrière à proximité de la pareclose. On peut voir la pareclose référencée 1, le longeron longitudinal arrière gauche référencé 2a et le plancher arrière référencé 3. L'ensemble de ces éléments définit un volume dans lequel on cherche à placer la batterie de traction pour un véhicule hybride ou électrique.

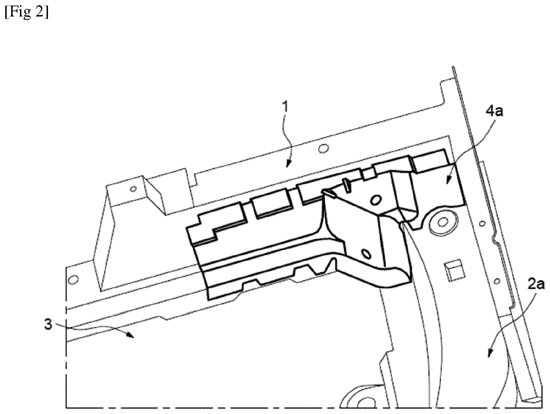

La figure 2 montre les mêmes éléments que ceux illustrés sur la figure 1, et montre en plus le renfort arrière gauche 4a selon l'invention. Le renfort arrière gauche 4a permet de supporter une des fixations de la batterie (non représentée) et de rigidifier la pareclose 1 et le longeron longitudinal 2a au voisinage de la batterie. Le renfort 4a permet ainsi de protéger la batterie de traction des déformations résultantes d'une collision latérale de type poteau.

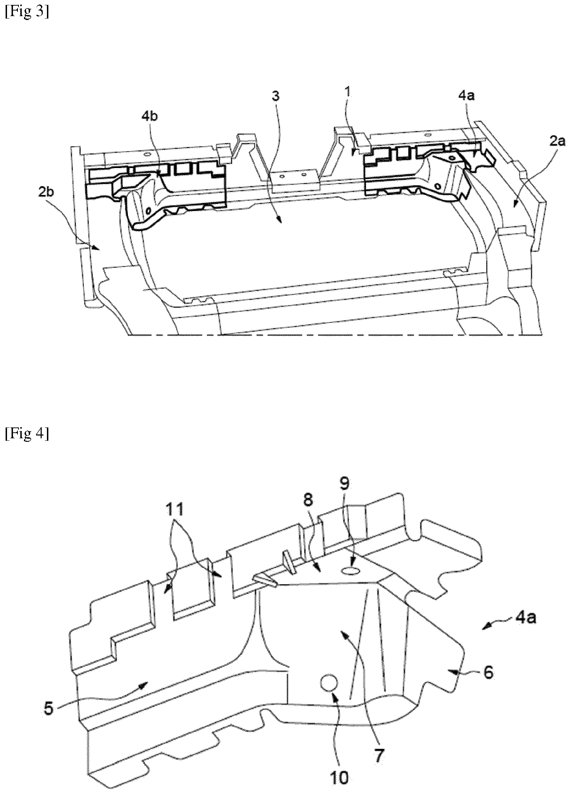

Un renfort arrière droit 4b similaire est disposé entre le longeron arrière droit 2b et la pareclose 1. La figure 3 illustre la pareclose 1, les longerons arrières 2a,2b, le plancher arrière 3 et les renforts 4a,4b.

Sur la figure 4, on peut voir que le renfort arrière gauche 4a comprend une première surface 5 essentiellement plane destinée à être disposée au contact de la pareclose 1, une deuxième surface 6 essentiellement perpendiculaire à la première surface et destinée à être disposée au contact d'un longeron longitudinal 2a,2b, et une équerre 7,8 disposée en saillie entre ces deux surfaces, délimitant un volume entre la pareclose 1, le longeron longitudinal 2a,2b adjacent et le plancher arrière 3. Cette équerre 7,8 comprend une troisième surface 7 disposée entre la première surface et la deuxième surface, et une quatrième surface 8 disposée perpendiculairement à la première surface 5, à la deuxième surface 6 et à la troisième surface 7.

Une lumière 9 destinée à recevoir une fixation de la batterie de traction est ménagée dans la quatrième surface 8. Un écrou est fixé de manière solidaire dans le volume défini par l'équerre, en regard de la lumière 9, par toute méthode adaptée. On citera notamment la soudure ou le brasage.

La première surface 5 et la deuxième surface 6 comprennent chacune au moins une zone d'accostage avec au moins l'un parmi la pareclose 1, un longeron longitudinal 2a,2b et le plancher arrière 3. L'accostage est réalisé par toute méthode adaptée, préférentiellement par soudure.

Dans un mode de réalisation particulier, des nervures 11 débouchant dans le volume délimité par la pareclose, le longeron, l'équerre et le plancher sont prévues sur au moins une des surfaces d'accostage de sorte à constituer des chemins découlement pour les fluides de cataphorèse. Un trou d'évacuation 10 des fluides de cataphorèse est alors ménagé dans la troisième surface 7 de sorte à permettre l'accès au volume délimité par la pareclose, le longeron, l'équerre et le plancher.

Dans un autre mode de réalisation, un collet ou épaulement est prévu sur l'un au moins parmi la première surface 5 et la troisième surface 7 dans leur partie au contact du plancher arrière 3. Par « collet », on entend toute surface du renfort s'éloignant de la pareclose ou du longeron longitudinal.

Dans un mode de réalisation particulier de l'invention, un bossage est prévu dans la partie de la quatrième surface 8 dans laquelle est ménagée la lumière 9 destinée à fixer la batterie. En effet dans un mode de réalisation préféré de l'invention, ce bossage n'est pas nécessaire, en particulier lorsque le véhicule a une garde au sol relativement basse. Cependant une batterie de traction utilisée dans l'invention peut être commune à plusieurs plateformes de véhicules PHEV ayant des gardes au sol différentes (conserver une batterie strictement identique entre plateformes facilite le travail de convergence sur le renforcement avec des comportement en choc similaire). La batterie de traction commune comporte des pattes de fixations qui sont également communes à plusieurs plateformes. Lorsqu'une batterie de ce type est montée sur un véhicule ayant une garde au sol plus importante (plancher plus haut), la batterie est malgré tout positionnée environ 19 mm plus bas par rapport aux longerons arrière : cet abaissement de la batterie est possible sur un véhicule de type SUV (acronyme anglais pour « Sport Utility Vehicle) avec une garde au sol plus importante. Cela permet d'augmenter le volume de coffre à bagage par exemple. Comme la batterie comporte des pattes de fixations identiques pour les différentes plateformes, le bossage sur la pièce permet de rattraper ce jeu et de conserver une distance minimale avec la batterie, identique sur les différentes plate-formes. Grâce au bossage on évite de prévoir des pattes de fixation longues impliquant une épaisseur de matière plus importante pour conserver une raideur équivalente. Le bossage permet de réduire la distance à parcourir pour fixer la batterie et contribue à limiter le transfert d'efforts et de déformations à la batterie.

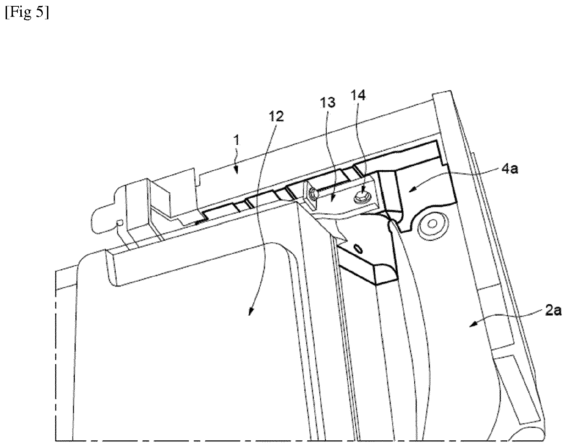

La figure 5 illustre la pareclose 1, le longeron longitudinal arrière gauche 2a et le renfort arrière gauche 4a, en situation avec la batterie 12 et une patte de fixation 13 de la batterie munie d'une vis de fixation 14 coopérant avec l'écrou solidaire du renfort disposé en regard de la lumière.

## Revendications

1. Véhicule électrique ou hybride muni d'une batterie de traction disposée sous le plancher arrière entre les longerons arrières et la pareclose entre les parties du plancher arrière,
le véhicule étant muni d'un renfort droit disposé au contact de la pareclose (1) et du longeron arrière droit, et d'un renfort gauche disposé au contact de la pareclose (1) et du longeron arrière gauche, chaque renfort étant muni d'une lumière (9) destinée à recevoir une fixation de la batterie de traction (12),
chaque renfort étant apte à recevoir une fixation d'une batterie de traction, et permet de rigidifier la pareclose (1) et le longeron longitudinal (2a,2b) afin de protéger la batterie de traction des déformations résultantes d'une collision latérale de type poteau,
le renfort comprend une première surface (5) destinée à être disposée au contact de la pareclose (1), une deuxième surface (6) essentiellement perpendiculaire à la première surface et destinée à être disposée au contact d'un longeron longitudinal (2a,2b), et une équerre (7,8) disposée en saillie entre ces deux surfaces, délimitant un volume entre la pareclose (1), le longeron longitudinal (2a,2b) adjacent et le plancher arrière (3), une lumière (9) destinée à recevoir une fixation de la batterie de traction est ménagée dans l'équerre (7,8).

2. Véhicule électrique ou hybride selon la revendication 1, dans lequel un écrou est fixé de manière solidaire dans le volume défini par l'équerre (7,8), en regard de la lumière (9).

3. Véhicule électrique ou hybride selon l'une quelconque des revendications précédentes, dans lequel l'équerre (7,8) comprend une troisième surface (7) disposée entre la première surface (5) et la deuxième surface (6), et une quatrième surface (8) disposée perpendiculairement à la première surface (5), à la deuxième surface (6) et à la troisième surface (7),
la lumière (9) destinée à recevoir une fixation de la batterie de traction étant ménagée dans la quatrième surface (8).

4. Véhicule électrique ou hybride selon la revendication 3, dans lequel la première surface (5) et la deuxième surface (6) comprennent chacune au moins une zone d'accostage avec au moins l'un parmi la pareclose (1), un longeron longitudinal (2a,2b) et le plancher arrière (3).

5. Véhicule électrique ou hybride selon la revendication 4, dans lequel des nervures (11) sont ménagées sur au moins une des surfaces d'accostage de sorte à constituer des chemins découlement pour les fluides de cataphorèse, chaque nervure (11) débouchant dans le volume délimité par la pareclose, le longeron, l'équerre et le plancher.

6. Véhicule électrique ou hybride selon la revendication 5, dans lequel un trou d'évacuation (10) des fluides de cataphorèse est ménagé dans la troisième surface (7) de l'équerre (7,8) de sorte à permettre l'accès au volume délimité par la pareclose, le longeron, l'équerre et le plancher.

7. Véhicule électrique ou hybride selon la revendication 3, dans lequel un collet ou épaulement est ménagé sur l'un au moins parmi la première surface (5) et la troisième surface (7) dans leur partie au contact du plancher arrière (3).

8. Véhicule électrique ou hybride selon la revendication 3, dans lequel un bossage est ménagé dans la partie de la quatrième surface (8) dans laquelle est ménagée la lumière (9) destinée à fixer la batterie.

## Patentansprüche

1. Elektro- oder Hybridfahrzeug mit einer Antriebsbatterie, die unter dem hinteren Boden zwischen den hinteren Längsträgern und dem Verbindungsstück zwischen den Teilen des hinteren Bodens angeordnet ist, wobei das Fahrzeug mit einer rechten Verstärkung, die in Kontakt mit dem Verbindungsstück (1) und dem rechten hinteren Längsträger angeordnet ist, und mit einer linken Verstärkung, die in Kontakt mit dem Verbindungsstück (1) und dem linken hinteren Längsträger angeordnet ist, versehen ist, wobei jede Verstärkung mit einer Öffnung (9) versehen ist, die dazu bestimmt ist, eine Befestigung der Antriebsbatterie (12) aufzunehmen,
wobei jede Verstärkung geeignet ist, eine Befestigung einer Antriebsbatterie aufzunehmen, und es ermöglicht, das Verbindungsstück (1) und den Längsträger (2a, 2b) zu versteifen, um die Antriebsbatterie vor Verformungen zu schützen, die aus einem Seitenaufprall vom Typ Pfosten resultieren,
wobei die Verstärkung eine erste Fläche (5) aufweist, die dazu bestimmt ist, in Kontakt mit dem Verbindungsstück (1) angeordnet zu werden, eine zweite Fläche (6), die im Wesentlichen senkrecht zu der ersten Fläche ist und dazu bestimmt ist, in Kontakt mit einem Längsträger (2a, 2b) angeordnet zu werden, und einen Winkel (7, 8), der vorspringend zwischen diesen beiden Flächen angeordnet ist und ein Volumen zwischen dem Verbindungsstück (1), dem angrenzenden Längsträger (2a, 2b) und dem hinteren Boden (3) begrenzt, wobei in dem Winkel (7, 8) eine Öffnung (9) ausgebildet ist, die dazu bestimmt ist, eine Befestigung der Antriebsbatterie aufzunehmen.

2. Elektro- oder Hybridfahrzeug nach Anspruch 1, bei dem eine Mutter in dem durch den Winkel (7, 8) definierten Volumen gegenüber der Öffnung (9) fest fixiert ist.

3. Elektro- oder Hybridfahrzeug nach einem der vorhergehenden Ansprüche, wobei der Winkel (7, 8) eine dritte Fläche (7), die zwischen der ersten Fläche (5) und der zweiten Fläche (6) angeordnet ist, und eine vierte Fläche (8), die senkrecht zu der ersten Fläche (5), der zweiten Fläche (6) und der dritten Fläche (7) angeordnet ist, aufweist,
wobei die Öffnung (9) zur Aufnahme einer Befestigung der Antriebsbatterie in der vierten Fläche (8) ausgebildet ist.

4. Elektro- oder Hybridfahrzeug nach Anspruch 3, wobei die erste Fläche (5) und die zweite Fläche (6) jeweils mindestens einen Bereich aufweisen, in dem sie mit dem Verbindungsstück (1) und/oder einem Längsträger (2a, 2b) und/oder dem hinteren Boden (3) zusammenstoßen.

5. Elektro- oder Hybridfahrzeug nach Anspruch 4, wobei auf mindestens einer der Stoßflächen Rippen (11) so angebracht sind, dass sie Abflusswege für die Kataphoreseflüssigkeiten bilden, wobei jede Rippe (11) in das Volumen mündet, das durch das Verbindungsstück, den Längsträger, den Winkel und den Boden begrenzt wird.

6. Elektro- oder Hybridfahrzeug nach Anspruch 5, wobei in der dritten Fläche (7) des Winkels (7, 8) ein Loch (10) zum Abführen der Kataphoreseflüssigkeiten angebracht ist, um den Zugang zu dem Volumen zu ermöglichen, das durch das Verbindungsstück, den Längsträger, den Winkel und den Boden begrenzt wird.

7. Elektro- oder Hybridfahrzeug nach Anspruch 3, wobei auf der ersten Fläche (5) und/oder der dritten Fläche (7) in ihrem den hinteren Boden (3) berührenden Bereich ein Flansch oder eine Schulter ausgebildet ist.

8. Elektro- oder Hybridfahrzeug nach Anspruch 3, wobei in dem Bereich der vierten Fläche (8), in dem die Öffnung (9) zum Befestigen der Batterie ausgebildet ist, ein Vorsprung ausgebildet ist.

## Claims

1. Electric or hybrid vehicle provided with a traction battery disposed beneath the rear floor between the rear side members and the partition between the parts of the rear floor,
the vehicle being provided with a right-hand reinforcement disposed in contact with the partition (1) and the rear right-hand side member, and with a left-hand reinforcement disposed in contact with the partition (1) and the rear left-hand side member, each reinforcement being provided with a slot (9) intended to receive a fastening means of the traction battery (12),
each reinforcement being able to receive a fastening means of a traction battery, and makes it possible to stiffen the partition (1) and the longitudinal side member (2a, 2b) in order to protect the traction battery from deformations resulting from a pole side impact,
the reinforcement comprises a first surface (5) intended to be disposed in contact with the partition (1), a second surface (6) which is essentially perpendicular to the first surface and is intended to be disposed in contact with a longitudinal side member (2a, 2b), and an angle bracket (7, 8) disposed projecting between these two surfaces, delimiting a volume between the partition (1), the adjacent longitudinal side member (2a, 2b) and the rear floor (3), a slot (9) intended to receive a fastening means of the traction battery is provided in the angle bracket (7, 8).

2. Electric or hybrid vehicle according to Claim 1, wherein a nut is securely fastened in the volume defined by the angle bracket (7, 8), facing the slot (9).

3. Electric or hybrid vehicle according to either one of the preceding claims, wherein the angle bracket (7, 8) comprises a third surface (7) disposed between the first surface (5) and the second surface (6), and a fourth surface (8) disposed perpendicularly to the first surface (5), to the second surface (6) and to the third surface (7),
the slot (9) intended to receive a fastening means of the traction battery being provided in the fourth surface (8) .

4. Electric or hybrid vehicle according to Claim 3, wherein the first surface (5) and the second surface (6) each comprise at least one docking zone with at least one from among the partition (1), a longitudinal side member (2a, 2b) and the rear floor (3).

5. Electric or hybrid vehicle according to Claim 4, wherein ribs (11) are provided on at least one of the docking surfaces so as to constitute flow paths for the cataphoresis fluids, each rib (11) leading into the volume delimited by the partition, the side member, the angle bracket and the floor.

6. Electric or hybrid vehicle according to Claim 5, wherein a discharge hole (10) for cataphoresis fluids is provided in the third surface (7) of the angle bracket (7, 8) so as to allow access to the volume delimited by the partition, the side member, the angle bracket and the floor.

7. Electric or hybrid vehicle according to Claim 3, wherein a collar or shoulder is provided on at least one from among the first surface (5) and the third surface (7) in the part thereof in contact with the rear floor (3) .

8. Electric or hybrid vehicle according to Claim 3, wherein a boss is provided in that part of the fourth surface (8) in which the slot (9) intended to fasten the battery is provided.
